# EUROPEAN PATENT APPLICATION

(11) **EP 2 002 705 A2**
(43) Date of publication of application: **17.12.2008**
(21) Application number: 07730391.5
(22) Date of filing: 19.03.2007
(51) Int. Cl.: A01F 11/00

(54) **CROTAL FOR IDENTIFYING ANIMALS**

(30) Priority: 21.03.2006 ES 200600707; 28.02.2007 ES 200700526
(71) Applicant: Cromasa Identificacion Electronica, S.A., 31013 Berriozar (ES)
(72) Inventor: LÓPEZ CISNEROS, Nicolas, Navarra (ES); JUANIZ MORIONES, Idoia, Navarra (ES)
(74) Representative: Cabinet Plasseraud
(86) International application number: PCT/ES2007/000150
(87) International publication number: WO 2007/107612

(57) **Abstract**

Crotal, for identifying animals, which consists of a female part in the form of a housing for receiving a respective male part, said female part being composed of a base piece (4) that defines the housing for receiving the male part and a mouth piece (5) that forms the mouth of the housing with means for retaining the male part inserted, which pieces (4) and (5) define complementary means (4.3 and 5.3) for the establishment between then of a retaining clip-fitting during assembly coupling, whilst when said pieces (4 and 5) are joined together they define an intermediate chamber (7) with which openings (4.4) and (4.5) of both pieces (4 and 5) communicate and via which the covering material (6) applied to the whole flows.

## Description

### Field of the Art

The object of the present invention relates to the identification of animals raised on livestock farms, proposing for such purpose a tag of the type provided for their attachment to any part of the animal's body, such as the ear for example.

### State of the Art

Identifying animals in livestock farms is a very important matter in order to know the history of each animal and to control any pathological events for the purpose of proceeding to the suitable treatments and prevent collective consequences.

In this sense, a system of monitoring animals presenting risk symptoms was started in the European Union in 1990, intensifying official veterinary service control means and methods.

For the purpose of the necessary identification and control, the animals are provided with visual- or electronic-type elements which incorporate an identification number assigned to the animal for life that allows the individual identification of that animal at any time to know its history and other animals it may have been around for the purpose of having the information necessary for any transaction of the animal and suitable control from the sanitary point of view, since it allows obtaining in a very short time period all traceability of the animal in particular, and from the point of view of the epidemiological study of any disease that may affect the species, data can be obtained which will help make the appropriate veterinarian decisions.

Visual identification elements include tags fixed to the animals' ears, which comprise a male part and a female part to be connected together like a clasp, the two parts being able to be included in a single constructive assembly, or they could be formed by two independent elements.

Embodiments of different tags formed by a single element in which both female and male parts are integrated are described for example in patent documents WO 95/04455, WO 91/10982, ES 1037475, FR 2635437 and FR 2442583.

At the same time embodiments of different tags formed by independent elements forming the female part and the male part, respectively, are described, for example, in patent documents ES 2198085, GB 2294664, EP 0105796, AU 56733, ES 2196477, EP 0138629, US 5308351, US 4581834 and in utility models ES 287068 and ES 288950.

In all these types of tags the male part is conventionally formed by a stem incorporating a sharp head intended for perforating the ear of the animal to be identified, whereas the female part is formed by a housing in which the stem of the male part is inserted, both parts having combined retention means so that the stem of the male part is trapped in the housing of the female part for the purpose of securing the tag in the assembly in question.

Embodiments are known in which the female part is formed by a body made of a hard material forming the housing for retaining the sharp head of the stem of the male part, a panel made of flexible material projecting from said body of the female part, as described, for example, in patent documents WO 95/04455, ES 2196477 and EP 0138629, as well as in utility model ES 288950.

Specifically, PCT application WO 95/04455 describes a tag formed by a male part and a female part, the latter including a frustoconical housing, by way of a thimble, intended for receiving the male part, which frustoconical housing is made of a hard and rigid material.

This patent WO 95/04455 describes (page 5, lines 1 to 4) that the frustoconical housing in the form of a thimble is connected to the flexible panel of the tag by molding. This molding connection is carried out through a flange made from the material of the mouth of the frustoconical housing, as can be seen in Figure 6 of this patent.

Located inside the frustoconical protuberance there is a ring with sections or flaps intended for retaining the male element when it is inserted therein. This ring is also found in many other background documents, as is the case of the aforementioned British patent GB 2294664.

French patent FR 2,635,437 describes a solution according to which said ring retaining the male element of the tag is made of a material similar to the material of the frustoconical protuberance and is connected to the latter by means of molding (lines 18 to 20 on page 5).

European patent EP 1037525 is based on a tag having the same features as that described in WO 95/04455, with the frustoconical housing being carried out in two parts, one in the form of a thimble and the other configuring the flanges retaining the male part, as described in patent FR 2,635,437. Likewise, and coinciding with Patent FR 2,635,437, both parts are connected together in the molding of the flexible panel of the tag.

According to the solution object of EP 1037525 the molding connection between the two parts forming the frustoconical housing is carried out by means of a type of seam between them.

In fact, patent EP 1037525 describes that the parts forming the housing have flanges provided with openings through which the covering material passes to form the connecting seam, such that in the constructive assembly the two parts must be located such that the openings of their flanges are perfectly opposite each other, which has the following drawbacks:
- It is hard to position the parts with the necessary precision for making the openings of their flanges exactly coincide.
- In the event that the parts are not precisely positioned, the connecting seam is not properly made and therefore the connection between the parts is defective since the strength of the connection is determined by the covering material passing through the openings of the flanges of both parts.
- Since the coupling for connecting the parts is done by simply superimposing them, there is little security for the assembly placement in order to correctly place the two parts opposite to one another.
- Once the two parts are formed, such parts are independent from one another, since the flexible panel is not molded thereto. This means that both parts must be handled separately and requires an operator to put one part in the other and to keep them like that until they are placed inside the corresponding mold, because as soon as the operator is no longer retaining both parts, the latter tend to come apart, such that the part forming the ring may come out of the retaining flaps of the frustoconical part when the operator is handling them, and if the operator is unaware that this has occurred, the tag will be molded with just the frustoconical part.
- The need for an operator to keep both parts coupled together until being placed in the mold makes it impossible to consider automating the manufacturing processes.
- In order for the openings of the flanges of both parts to be correctly superimposed on one another, one of them must be arranged in an exact radial position with respect to the other, which again greatly complicates any attempt to automate the assembly of one part in the other and to automate the subsequent molding process.
- The fact that a deviation in the radial positioning of both parts leads to different degrees of a seam, it prevents tags thus formed from having uniform features with regard to the strength in the connection between both parts.

The incorporation of an electronic identification element in the field of the mentioned tags is further known and it allows remote control, to which end patent US 4 506 630 proposes, for example, a solution consisting of incorporating an electronic element of this type hanging in the outer part of the tag.

Patents EP 0 219 186 and WO 92/02127 propose another type of solution consisting of incorporating an electronic element in the panel of one of the parts of the tag which is especially intended for that purpose.

Other solutions, such as that described in patent WO 2004/034779, incorporate an electronic element in a housing defined in the constructive formation of the female part of the tag. These solutions in turn require a special shape for the housing of the electronic element, generally coupling the two parts together, the housing being defined therebetween, connected by means of ultrasounds to close the two mentioned parts, which does not assure a good seal for the closure and involves the risk that contaminating filtrations may occur.

In these embodiments the electronic element consists of a coil to which a small chip has been connected, there being different sized elements of this type, such that the housing included in the tag is formed according to a particular measurement of such elements, and other elements having different measurements cannot be used in the same tag.

### Object of the Invention

The present invention proposes a tag of the type mentioned for being placed on the ears of the animals in question, having features that make the construction particularly advantageous, resulting in a perfectly strong structure.

This tag object of the invention is of the type comprising a male part and a male part intended to be coupled to one another by means of insertion in clasping form, the male part having to that end a stem with a flared head and the female part having a housing provided in the mouth with shapes that allow retaining the head of the mentioned stem of the male part when said head is inserted therein.

The housing of the female part is formed, as in the known embodiments, by a thimble-like part determining the bottom, and another ring-like part determining the mouth with the flaps or tabs for retaining the head of the stem of the male part of the tag, which parts are independent in order to manufacture them by molding, being coupled together in a connecting assembly to form the tag.

The mouth part including in the inner contour the tabs for retaining the male part of the tag externally determines a ring-shaped perpendicular wing provided with a distribution of through openings therein, whereas the part determining the bottom has in the area of the mouth an axial flare in which lateral through openings are defined therein.

The flare of the part determining the bottom furthermore internally forms a ring-shaped groove, whereas the mouth part has an outward flange which is susceptible of being housed in the mentioned groove of the bottom part in the assembly coupling between both parts.

The coupling between both parts forming the female part of the tag can thus be carried out automatically since it is not necessary to position the openings of said parts opposite one another, given that when coupled there is a ring-shaped chamber between them, the openings of both parts thereby communicating such that when the covering material is injected, said material enters the mentioned chamber through certain openings and exits through others, thus forming in the assembly a perfect connecting seam by means of the covering material, independently of the relative position in which the openings of the two parts are located, compared to the known solutions in which the covering material commonly passes through the opposing openings of the two parts, such that said openings must perfectly coincide, otherwise the section of the material passing through them is reduced.

Said connecting seam of the two parts forming the female part of the tag is further determined with passage of the connecting material in two perpendicular directions, thus assuring the securing in the axial and transversal directions, the connection therefore being more efficient than in known solutions in which the connecting seam is formed only in the axial direction of the coupling of the parts.

In addition, the mouth part and the bottom part are coupled together with an elastic clip-fitting between both parts by means of inserting the outward flange of the mouth part in the inner groove of the bottom part, which allows a prior connecting assembly between both parts in order to handle the assembly as a single part in the process of applying the covering material on the assembly, making it easier to automate manufacturing processes.

The solution herein described thus provides the following advantages in relation to the solutions known until now:
- Radial positioning between the two parts forming the frustoconical housing of the tag is not necessary.
- The fixing between both parts assures the securing in perpendicular (axial and transversal) directions, improving the strength in the connection between both parts.
- The parameters of the connection between both parts are independent of the radial position they occupy in the molding that connects them together, such that all the tags can thus provide identical and assured parameters.
- The two parts forming the frustoconical housing are connected together by means of a elastic clip-fitting, whereby making it easier to handle, transport and finally assemble them in the mold, since these two parts can be connected together at the same point of their manufacture, already forming a perfect assembly unit, until the final shaping of the tag, such that when transported from the place of manufacture to the molding of the tag, said parts form an assembly unit, without the need for any operator, thereby preventing both parts from accidentally coming apart, from being lost, from having a defective mutual positioning, etc.
- The fact that both parts are connected together by means of elastic clip-fitting in any radial position between them, and the fact that it is not necessary to keep then connected together until placing them in the mold, along with the fact that both parts can occupy any radial position relative to one another allows automating both the process of assembling the mouth part on the bottom part, as well as the process of connecting them together and the final molding of the tag, thus automating the entire manufacturing process.

According to one embodiment, the flare provided with side openings of the mouth of the part forming in the female part of the tag the housing for inserting the male part, as well as the peripheral wing provided with vertical openings of the part of the mouth, form a radial prolongation in mutual correspondence, there being formed between these prolongations of both parts an intermediate gap in which there is included an electronic identification element which is secured inside said gap between a lower seat and an upper stop.

A female part of the tag is thus obtained in which the two parts forming it are connected in a side seam and in a vertical seam by means of the covering material applied on the connection, including an electronic identification element in a radial prolongation that is surrounded by the same covering material applied on the connection of the two parts, such that the closure of the prolongation is completely sealed.

The gap for housing the electronic element between the mentioned radial prolongations of the parts forming the female part of the tag has a stepped bottom, allowing the incorporation of different sized electronic elements on the different heights of the bottom, in relation to which corresponding stops are provided in the upper part for the immobile securing of the corresponding electronic element in the housing.

The retaining stops for retaining the electronic elements at the upper part can be in the form of teeth arranged in the end side walls of the housing, which allows securing the electronic element to be incorporated by means of a retaining clip-fitting, which facilitates the construction assembly of the corresponding part of the tag, as well as the construction even with just the radial prolongation of the mouth part of the housing for the insertion of the male part, applying the covering material directly on the housing of the electronic element if the features of the latter allow withstanding the temperature of said covering material.

Therefore the described tag has clearly advantageous features and the embodiment thereof has its own identity and preferred character in relation to conventional tags with the same function.

### Description of the Drawings

Figure 1 shows a front view of the female part of a tag incorporated in the ears of the animals in question.
Figure 2 is a corresponding sectioned side view with regard to the previous figure.
Figure 3 shows an elevational view of the mouth part of the female part of a tag according to the invention.
Figure 4 is a corresponding plan view in correspondence with the previous figure.
Figure 5 shows a sectioned elevational view of the bottom part of the female part of a tag according to the invention.
Figure 6 is a plan view of the previous part.
Figure 7 is a cross-section view of the coupled assembly of the two parts forming the female part of the tag according to the invention.
Figure 8 shows a cross-section view of the female part of the tag according to the invention provided with the covering material.

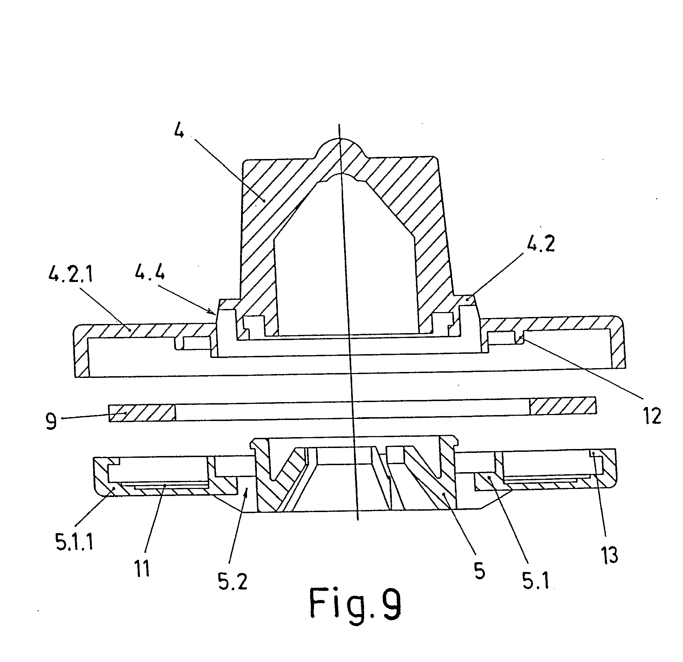

Figure 9 shows a cross-section view during the step for assembling the female part of a tag including an electronic identification device.

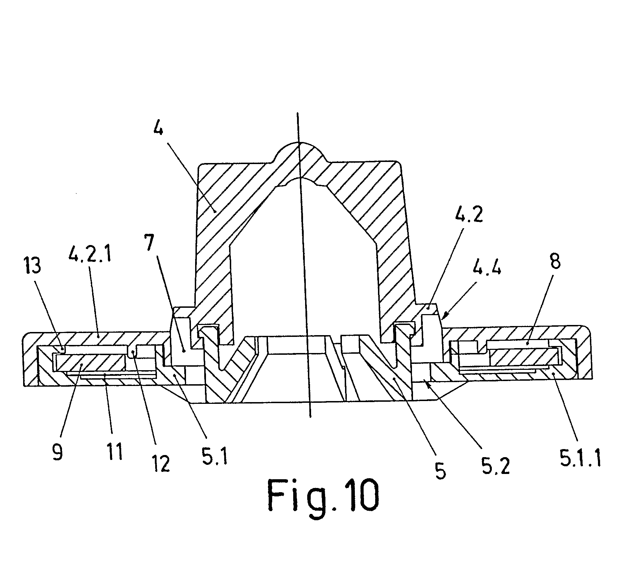

Figure 10 is a view of the previous assembly with the elements coupled.

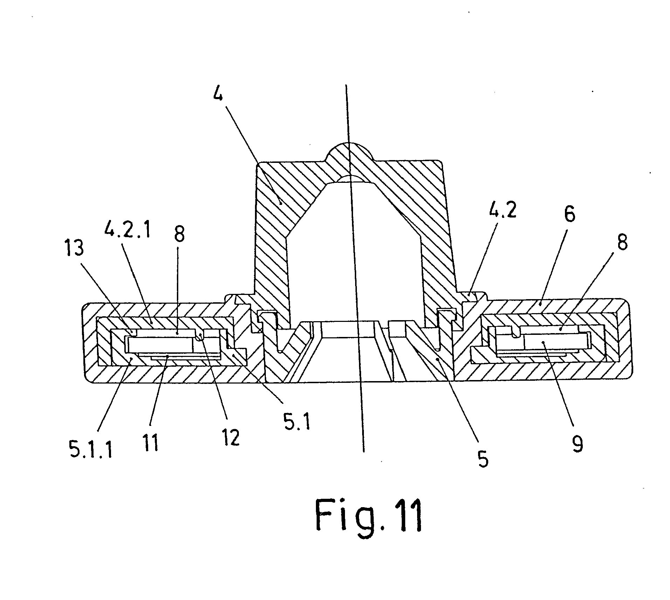

Figure 11 is a view of the previous assembly provided with the covering material.

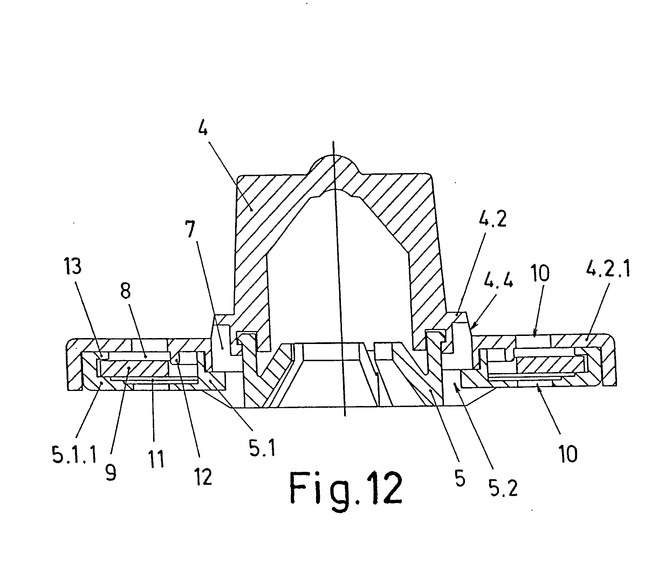

Figure 12 is a view like the previous view with an entrance of the covering material into the housing of the electronic element.
Figure 13 is a section of the female part of a tag, similar to the previous views but with the covering material applied directly on the housing of the electronic element at the upper part.
Figure 14 is a cross-section view of the female part of a tag with the radial prolongation for housing the electronic element defining a panel.
Figure 15 is a perspective view of the part in the form of a cap or thimble of the female part of the tag according to said embodiment of the previous figure.
Figure 16 is a perspective view of the part in the form of a star of the female part of the tag according to the embodiment of Figure 14.
Figure 17 is a perspective view from the upper part of said female part of the tag according to Figure 14.
Figure 18 is a perspective view from the lower part of the same female part of the tag.

### Detailed Description of the Invention

The object of the invention relates to a tag of the type used for identifying animals, incorporated on the ears of such animals, proposing one embodiment particularly affecting the constructive shape of the female part of the tag, providing advantageous features for the process of the constructive manufacture of the tag and improving the consistency of the assembly of the female part which is integrated therein.

Tags intended for being incorporated in the ears of animals conventionally comprise a male part and a female part, the male part determining a stem with a sharp flared head for piercing the ear of the animal in question, whereas the female part determines a housing for the insertion of the head of the male part, said housing having in the mouth thereof shapes by means of which the mentioned head of the male part is retained, preventing it from coming out once the coupling has been performed.

The female part of said tags is formed by an assembly (1) which can integrate a preferably flexible panel (2) and a core (3) forming the housing for inserting the head of the male part. Likewise, and without changing the concept, the panel (2) can be integrated in the male part of the tag and the female part can be formed only by the core (3) determining the housing for inserting the head of the male part.

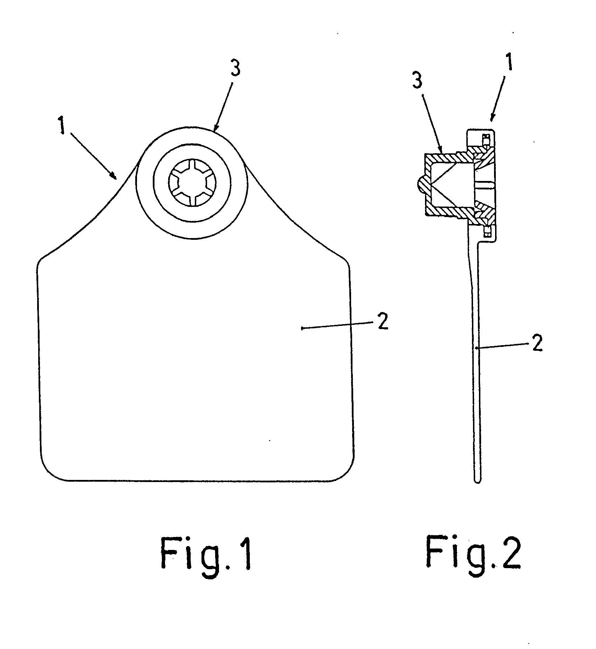

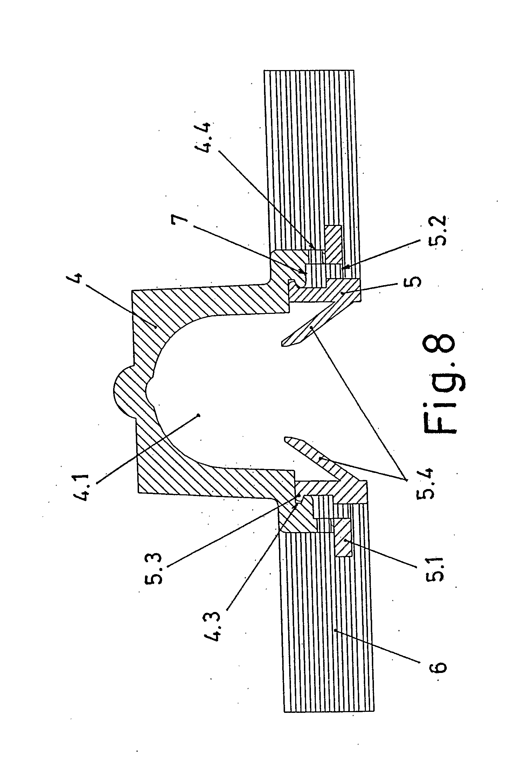

For the sake of molded manufacture, which is very difficult or impossible with a single part, the core (3) is formed with two independent parts, one of them (4) in the form of a cap or thimble, determining the bottom of the housing, and the other one (5) in the form of a ring, determining the mouth of the housing with the shapes for retaining the head of the male part of the tag, as depicted in Figure 1, on the assembly of which a covering material (6) is applied, as depicted in Figure 8, whereby also forming the panel (2).

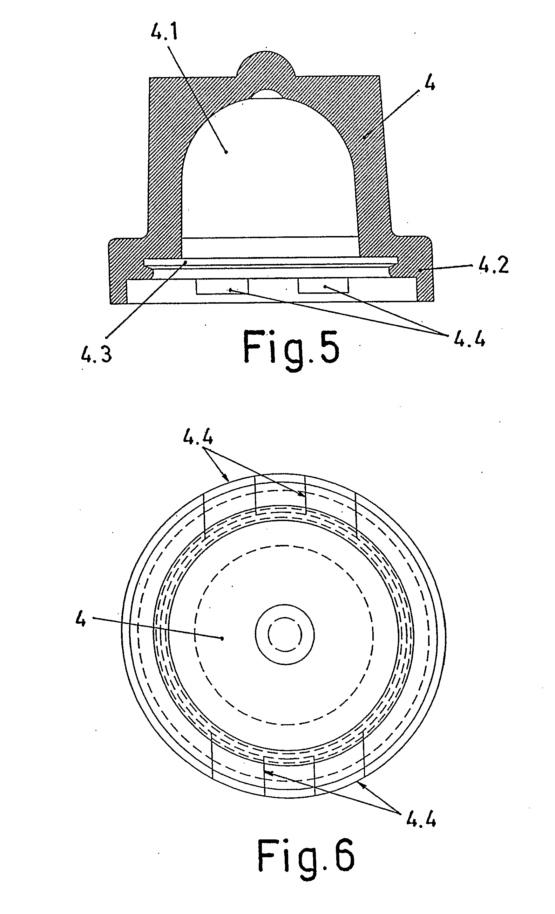

According to the invention, the part (4) in the form of a cap (Figures 5 and 6) determines an inner cavity (4.1) open at one end, in which there is defined a flare (4.2), internally provided with a ring-shaped groove (4.3), whereas in the side wall said flare (4.2) has a series of openings (4.4).

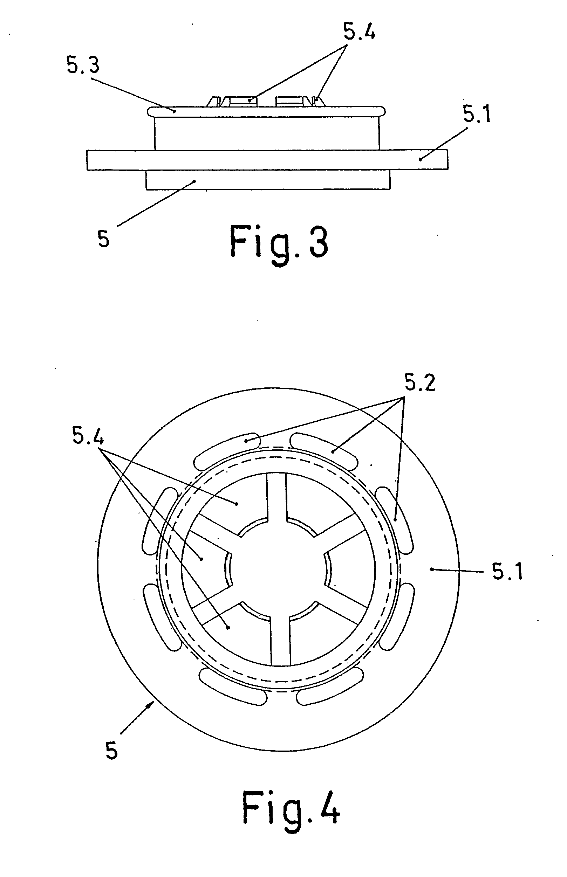

The mouth part (5) (Figures 3 and 4) in turn perpendicularly determines a ring-shaped perimetral wing (5.1) on the outside, in which a series of through openings (5.2) are defined, whereas at one end this part (5) has an outward perimetral flange (5.3). This part (5) internally has a series of inclined flaps (5.4) which are the shapes intended for retaining the head of the male part of the tag.

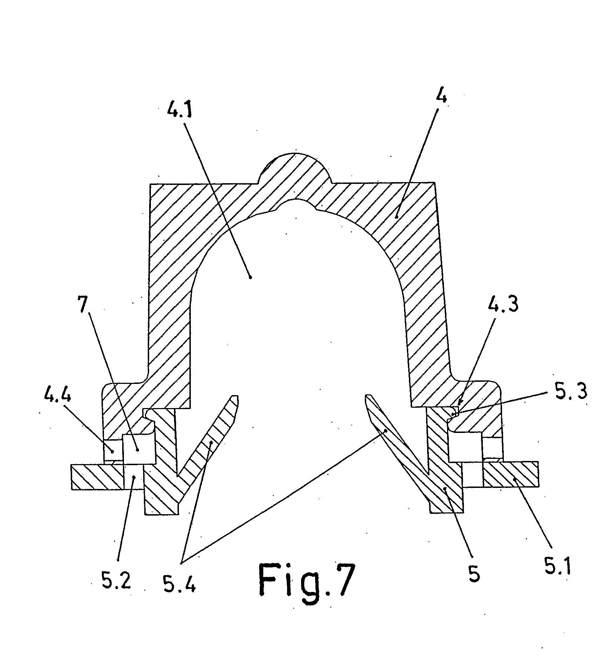

The two mentioned parts (4 and 5) forming the core (3) are thus susceptible of being coupled, a connecting clip-fitting being established between them by means of inserting the flange (5.3) of the mouth part (5) in the groove (4.3) of the bottom part (4), whereby forming a connection between both parts (4 and 5) connecting them together as a single part, as depicted in Figure 7, which allows handling the assembly as a single unit for the process of applying the covering material (6) during the manufacture of the tag, which facilitates automating said process.

In addition, in the coupling assembly of the two parts (4 and 5), there is formed between them a chamber (7) with which the openings (4.4) of the bottom part (4) communicate laterally and with which the openings (5.2) of the mouth part (5) communicate axially, such that when the covering material (6) is injected on the core (3), said material (6) flows through all the openings (4.4 and 5.2), filling the chamber (7) and thereby forming a connection between the parts (4 and 5) in the form of a seam as a result of the material (6) going through the mentioned openings (4.4 and 5.2), as can be seen in Figure 8.

With this arrangement, the connecting coupling between the parts (4 and 5) does not require any particular positioning since the insertion of the flange (5.3) in the groove (4.3) can be established at any relative angular position of the two parts (4 and 5), whereas the openings (4.4) of the bottom part (4) do not require being opposite to the openings (5.2) of the mouth part (5) for the material (6) to flow through them between the chamber (7) and the outside, the section of the material (6) through the mentioned openings (4.4 and 5.2) being integral in any relative position of the parts (4 and 5), thus establishing a perfectly strong connection that is completely effective in any relative position of the parts (4 and 5).

In addition, since the material (6) passes in a lateral direction through openings (4.4) and in an axial direction axial through openings (5.2), the connection between parts (4 and 5) is assured in both lateral and axial directions, defining a better securing between both parts (4 and 5) and therefore a more robust structure of the tag.

According to one embodiment, the flare (4.2) of the part (4) in which the side openings (4.4) are defined and the wing (5.1) of part (5) in which the vertical openings (5.2) are defined determine respective radial prolongations (4.2.1) and (5.1.1), corresponding to each other, between which there is a gap (8) in which an electronic element (9) is housed for remote identification control by radio frequency or a similar system. Said radial prolongations (4.2.1) and (5.1.1) can have any shape in their peripheral contour, such as circular, oval, quadrangular, triangular, etc., without affecting the concept of the invention.

The assembly of the radial prolongations (4.2.1) and (5.1.1), between which the gap (8) for housing the electronic element (9) is defined, is covered with the covering material (6) applied when connecting the parts (4 and 5), whereby establishing between the prolongations (4.2.1) and (5.1.1) a perfectly sealed closure, preventing the possibility of contaminating filtrations between the gap (8) and the outside. If the electronic element (9) housed in the gap (8) allows supporting a certain temperature level, the prolongations (4.2.1) and (5.1.1) can be provided with holes (10) so that the covering material (6) can enter and fill the gap (8), completely sealing in the electronic element (9).

The gap (8) is provided with a stepped bottom (11), such that it allows placing an electronic element (9) that can have different sizes, on a seat on the corresponding height of said bottom (11).

For the immobile securing of the electronic element (9) inside the gap (8), there are provided upper stops in relation to the different heights of the bottom (11), which stops can be projections (12) aimed downwards from the upper part for maintaining the corresponding electronic element (9) against the respective height of the bottom (11).

According to one embodiment, in relation to highest and lowest height levels of the bottom (11), the upper stops for securing the electronic elements (9) can be teeth-like shapes (13) defined in the end vertical walls of the gap (8) which allows securing the corresponding electronic elements (9) with a retaining clip-fitting with regard to said teeth-like shapes (13).

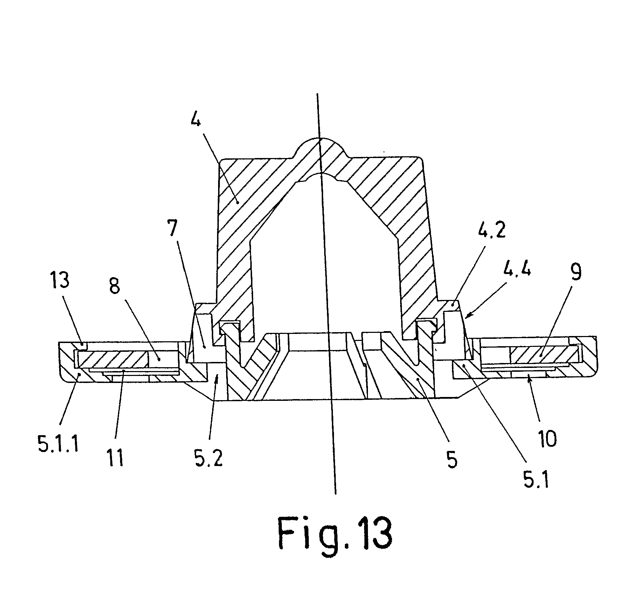

This embodiment facilitates the constructive assembly of the whole of the female part of the tag, and even allows applying the covering material (6) directly on the gap (8), without needing the upper part (4.2.1) thereof, as depicted in Figure 13, if the features of the electronic element (9) arranged therein allow supporting the temperature for applying said covering material (6).

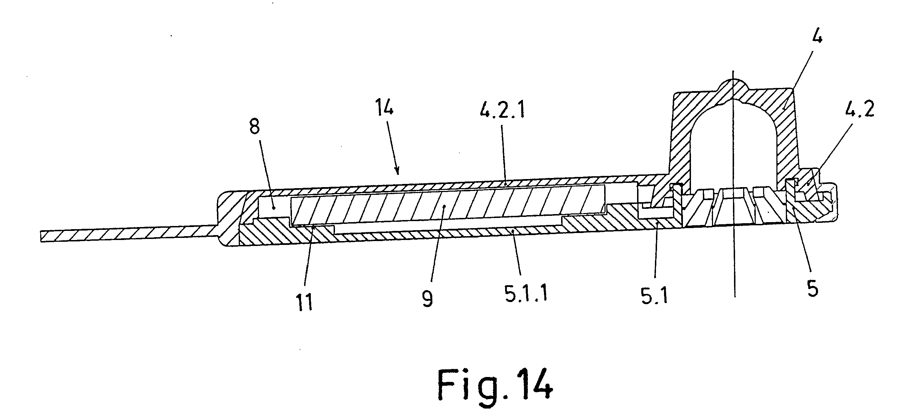

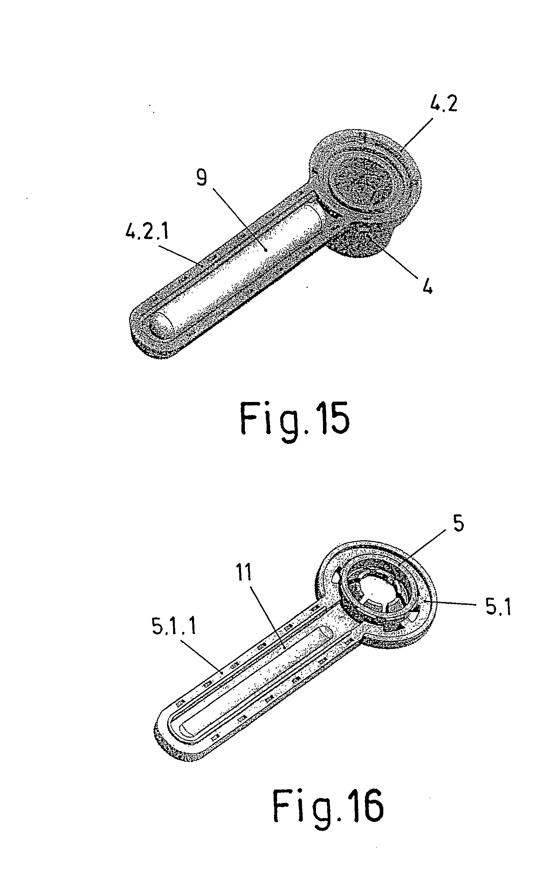

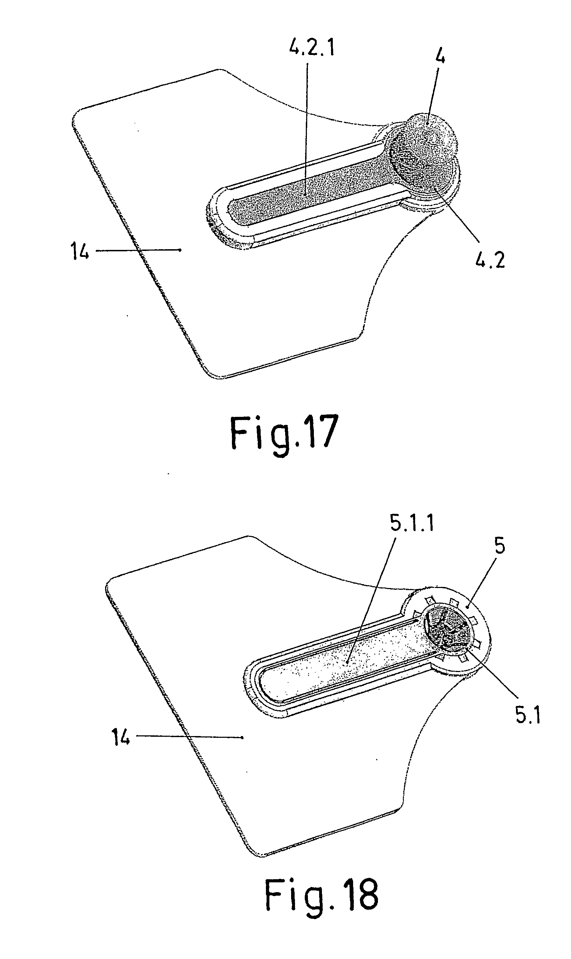

According to one embodiment, the radial prolongations (4.2.1) and (5.1.1), between which the gap (8) for housing the electronic element (9) is defined, can be defined according to a radial expansion towards one side in the form of a panel (14), in which an elongated electronic element (9), or an electronic element having any shape, can be housed as can be seen in Figures 14 to 18. Said expansion (14) in the form of a panel can in turn determine any shape in its contour, for example a trapezoidal, triangular, rectangular, elliptical shape, etc., without affecting the concept.

## Claims

1. A tag for identifying animals, of the type comprising a male part provided with a stem determining a sharp flared head and a female part determining a housing for inserting the head of the male part, said housing being provided with retaining means for preventing the head of the stem of the male part from coming out once it is inserted, with the female part formed by a part (4) in the form of a cap determining the gap of the housing for inserting the head of the male part and a part (5) in the form of a ring determining the mouth of said gap with the means for retaining the head of the male part therein, **characterized in that** the part (4) in the form of a cap and the part (5) in the form of a ring forming the female part determine complementary means (4.3 and 5.3) which allow a retaining clip-fitting when said parts (4 and 5) are connected, and **in that** when said parts (4 and 5) are connected together, they determine an intermediate chamber (7) with which openings (4.4) of part (4) in the form of a cap and openings (5.2) of part (5) in the form of a ring communicate, through which openings the covering material (6) applied on the assembly flows.

2. The tag for identifying animals according to claim 1, **characterized in that** the part (4) in the form of a cap forming the female part determines therein a ring-shaped groove (4.3), whereas the part (5) in the form of a ring determines an outward flange (5.3), an insertion thereby being established between said flange (5.3) and the groove (4.3) which determines a securing retention between the parts (4 and 5) when they are connected together in the assembly coupling.

3. The tag for identifying animals according to claim 1, **characterized in that** the part (4) in the form of a cap of the female part determines openings (4.4) defined in its side wall, whereas the part (5) in the form of a ring determines a peripheral wing (5.1) on the outside, in which through openings (5.2) are defined in the axial direction.

4. The tag for identifying animals according to claims 1 and 3, **characterized in that** the openings (4.4) of the part (4) in the form of a cap laterally communicate with the chamber (7) that is between the parts (4 and 5) when the latter are connected together, whereas the openings (5.2) of the part (5) in the form of a ring axially communicate with the mentioned chamber (7), the passage of the covering material (6) through said openings (4.4 and 5.2) giving rise to an axial and transversal connecting seam between the two parts (4 and 5).

5. The tag for identifying animals according to claims 1, 3 and 4, **characterized in that** the part (4) in the form of a cap and the part (5) in the form of a ring forming the female part can be arranged in any relative angular position angular with respect to each other so that the covering material (6) freely flows through the respective openings (4.4 and 5.2) between the inside and outside of the chamber (7).

6. The tag for identifying animals according to claim 1, **characterized in that** the parts (4 and 5) forming the female part determine radial prolongations (4.2.1) and (5.1.1) from the areas (4.2) and (5.1) in which the respective openings (4.4 and 5.2) are defined, between which prolongations (4.2.1) and (5.1.1) there is defined a gap (8) in which an electronic identification element (9) is housed, said gap (8) determining a stepped bottom (11) on which different sized electronic elements (9) can be seated.

7. The tag for identifying animals according to claim 6, **characterized in that** in relation to the different heights of the stepped bottom (11) of the gap (8), projections (12) aimed downwards are determined in the upper part for securing the electronic element (9) against the seat on the corresponding height of the stepped bottom (11).

8. The tag for identifying animals according to claim 6, **characterized in that** in the end vertical walls of the gap (8) teeth-like shapes (13) are determined by means of which a securing clip-fitting of the electronic element (9) is established at the highest and lowest height levels of the stepped bottom (11).

9. The tag for identifying animals according to claim 6, **characterized in that** the prolongations (4.2.1) and (5.1.1) determining the gap (8) for housing the electronic element (9) extend according to a radial expansion towards one side in the form of a panel (14).
